# EUROPÄISCHE PATENTSCHRIFT

(11) **EP 2 268 502 B1**
(45) Veröffentlichungstag und Bekanntmachung des Hinweises auf die Patenterteilung: **27.01.2016**
(21) Anmeldenummer: 09734569.8
(22) Anmeldetag: 17.04.2009
(51) Int. Cl.: B60N 2/68

(54) **STRUKTURTEIL, FAHRZEUGSITZ MIT EINER RÜCKENLEHNE UND VERFAHREN ZUR HERSTELLUNG EINES STRUKTURTEILS ODER EINER RÜCKENLEHNE**
STRUCTURAL PART, VEHICLE SEAT COMPRISING A BACK REST, AND METHOD FOR PRODUCING A STRUCTURAL PART OR A BACK REST
ÉLÉMENT STRUCTURAL, SIÈGE DE VÉHICULE ÉQUIPÉ D'UN DOSSIER ET PROCÉDÉ DE FABRICATION D'UN ÉLÉMENT STRUCTURAL OU D'UN DOSSIER

(30) Priorität: 22.04.2008 DE 102008020289
(43) Veröffentlichungstag der Anmeldung: 05.01.2011
(73) Patentinhaber: Johnson Controls GmbH, 51399 Burscheid (DE)
(72) Erfinder: ECKENROTH, Dirk, 51469 Bergisch-Gladbach (DE); RÖBKES, Holger, 42651 Solingen (DE)
(74) Vertreter: Schwöbel, Thilo K.
(86) Internationale Anmeldenummer: PCT/EP2009/002818
(87) Internationale Veröffentlichungsnummer: WO 2009/129965

(56) Entgegenhaltungen:
- DE-A1- 10 240 042
- DE-A1-102006 004 466
- DE-A1-102006 005 751
- DE-A1-102006 036 915
- DE-A1-102006 036 935
- DE-A1-102007 042 169

## Beschreibung

Die vorliegende Erfindung betrifft ein Strukturteil, einen Fahrzeugsitz mit einer Rückenlehne, sowie ein Verfahren zur Herstellung eines Strukturteils oder einer Rückenlehne.

Rückenlehnen für Fahrzeugsitze sind allgemein bekannt. Beispielsweise sind aus den Druckschriften EP 1 688 299 B1, DE 10 2006 036 935 A1 und DE 10 2005 043 084 A1 ein Fondlehnenteil eines Fahrzeugsitzes bzw. eine Rückenlehne für eine Sitzbank eines Fahrzeuges bzw. ein Bausatz zur Herstellung einer kippbaren Rückenlehne für eine Sitzbank eines Fahrzeugs bekannt. Hierbei werden durchgängig Profilteile derart mit einem Plattenteil der Rückenlehne verbunden, so dass es zu einer vergleichsweise großflächigen Anlage eines Bereichs des Plattenteils einerseits und eines Bereichs der Profilteile andererseits kommt, nämlich insbesondere im Bereich von sogenannten Flanschen bzw. Laschen, die die als Hutprofile oder die als mit Laschen versehenen U-Profile vorgesehene Profilteile aufweisen. Die Realisierung solcher Profilteile mit Flanschen und die Verschweißung bzw. Verbindung solcher Flansche mit eine Plattenteil bringt jedoch einerseits eine Erhöhung des Gewichts der Rückenlehne ohne in gleicher Weise erhöhte Stabilität sowie ferner einen höheren Materialaufwand sowie Aufwand zur Herstellung solcher Profilteile mit sich, da die Laschen verformt werden müssen.

Alternative Strukturteile für Rückenlehnen, mit vorteilhaften Profilteilquerschnitten welche mit einem Plattenteil verbunden sind, sind aus den Druckschriften DE 102 40 042 A1, DE 10 2006 005 751 A1 oder der den Oberbegriff des Anspruchs 1 bildenden DE 10 2006 004 466 A1 bekannt.

Der vorliegenden Erfindung liegt daher die Aufgabe zugrunde, ein Strukturteil, insbesondere für eine Rückenlehne eines Fahrzeugsitzes, bzw. einen Fahrzeugsitz mit einer Rückenlehne, insbesondere für eine Rücksitzbank eines Fahrzeuges, derart anzugeben, dass zum einen das Strukturteil bzw. die Rückenlehne bzw. der Fahrzeugsitz einer hohen Belastung standhalten kann, jedoch dennoch ein vergleichswiese geringes Gewicht aufweist sowie leicht und vergleichsweise schnell, kostengünstig und mit Blick auf die Herstellung unterschiedlicher Varianten des Strukturteils variabel herstellbar ist.

Die Aufgabe wird durch ein Strukturteil, insbesondere für die Rückenlehne eines Fahrzeugsitzes, nach Anspruch 1 gelöst.

Hierdurch ist es erfindungsgemäß in einfacher und herstellungstechnisch schnell und kostengünstig zu realisierender Weise möglich, ein erfindungsgemäßes Strukturteil aufzubauen. Ein besonderer Vorteil liegt in der Möglichkeit, die Bauteile (d.h. das Plattenelement und die Profilelemente) hinsichtlich ihrer Maßgenauigkeit (jedenfalls mit Blick auf solche Bereiche der Bauteile, die miteinander verbunden werden sollen) mit einer vergleichsweise geringen Toleranz realisierbar sind, so dass eine hohe Produktqualität und eine Produktion mit geringer Fehlerrate erreichbar sind. Erfindungsgemäß sind besonders die Sicken des Plattenelements mit besonders hoher Präzision hinsichtlich ihrer Positionierung und ihrer Planheit (bzw. Ebenheit) herstellbar. Die Aufgabe wird auch gelöst durch einen Fahrzeugsitz, insbesondere Rücksitzbank eines Fahrzeuges, mit einer Rückenlehne und gegebenenfalls mit einem Sitzteil, wobei die Rückenlehne und/oder das Sitzteil wenigstens ein erfindungsgemäßes Strukturteil, bevorzugt jedoch zwei erfindungsgemäße Strukturteile aufweist, wobei es erfindungsgemäß besonders bevorzugt ist, dass die Strukturteile eine unterschiedliche Größe aufweisen. Erfindungsgemäß ist es besonders vorgesehen, dass die Profilelemente zusammen entweder einen geschlossenen (insbesondere im wesentlichen viereckigen bzw. rechteckigen) Rahmen bilden oder auch lediglich eine u-förmige Anordnung auf dem Plattenelement bilden. Zur Realisierung eines vollständig geschlossenen Rahmens ist es erfindungsgemäß insbesondere vorgesehen, dass vier Profilelemente (das erste und zweite Profilelement zusammen mit einem dritten und einem vierten Profilelement) vorgesehen sind, wobei jedes Profilelement zum einen mit dem Plattenelement und jedes Profilelement zum anderen mit zwei anderen der Profilelemente zur Bildung des Rahmens miteinander verbunden sind. Erfindungsgemäß kann es ebenfalls vorgesehen sein, dass mehr als vier Profilelemente zur Vervollständigung des Rahmens eingesetzt werden; insbesondere kann es erfindungsgemäß auch vorgesehen sein, dass in den Eckbereichen des Rahmens Eckstücke bzw. Eckprofilelemente vorgesehen sind. Im Folgenden wird jedoch vorwiegend auf das erste Profilelement Bezug genommen, welches in einem Verbindungsbereich (insbesondere ein Eckbereich des Rahmens) mit dem zweiten Profilelement verbunden ist, wobei es sich jedoch bei dem ersten und zweiten Profilelement um beliebige der den Rahmen bildenden bzw. den mit dem Plattenelement verbundenen Verstärkungsaufbau bildenden Profilelemente handelt.

Ganz besonders bevorzugt ist es gemäß der vorliegenden Erfindung, dass das erste und/oder zweite Profilelement zumindest teilweise mittels einer Stumpfschweißung mit dem Plattenelement verbunden ist. Dies bedeutet insbesondere, dass beispielsweise ein Schenkel eines der Profilelemente mit seiner (längs des Profilteils verlaufenden) Kante (welche im wesentlichen lediglich die Oberfläche der Materialstärke multipliziert mit der Länge der Kanten aufweist) mit der Oberfläche des Plattenelements mittels einer Schweißung verbunden wird. Es ist ferner erfindungsgemäß bevorzugt, dass diese Art der Schweißung mittels eines Lasers erfolgt (Laserschweißung), wobei der Laserstrahl von der dem (gerade zu schweißenden) Profilelement abgewandten Seite des Plattenelements erfolgt.

Erfindungsgemäß ist ferner bevorzugt, dass das erste und/oder zweite Profilelement als ein U-Profil und/oder ein C-Profil und/oder ein Z-Profil vorgesehen ist, wobei im Querschnitt das Schenkelende oder die Schenkelenden des ersten und/oder zweiten Profilelements bevorzugt ohne Befestigungslaschen vorgesehen sind. Erfindungsgemäß ist jedoch nicht vollständig ausgeschlossen, dass das erste und/oder zweite Profilelement (auch) Laschen aufweisen kann/können, insbesondere an solchen Stellen, die zur Verbindung mit Hilfselementen vorgesehen sind, etwa zur Anbindung von Gurtaufrollern und/oder zur Anbindung von (beispielsweise zur Verschwenkung der Rückenlehne vorgesehenen) Drehachsen und/oder zur Anbindung von (beispielswiese zur Festlegung der Rückenlehne relativ zu einer Fahrzeugkarosserie vorgesehenen) Arretierungsschlössern oder Arretierungsbolzen. Erfindungsgemäß ist besonders bevorzugt, dass das erste und/oder zweite Profilelement eine solche Form bzw. einen solchen Querschnitt aufweist, dass nach der Anbindung an das Plattenelement ein eine vergleichsweise hohe Stabilität aufweisendes Hohlprofil gebildet wird. Hierzu eignen sich erfindungsgemäß insbesondere U-Profile bzw. C-Profile (die im Querschnitt eine offene Seite aufweisen, die durch die Anbindung an das Plattenelement zur Bildung eines Hohlprofils geschlossen wird). Erfindungsgemäß ist es jedoch auch möglich, dass das erste und/oder das zweite Profilelement als ein L-Profil oder als ein Z-Profil ausgebildet ist. Insbesondere zusammen mit einem umgeformten Rand des Plattenelements kann auch mit einem solchen Profilelement (nach dem Zusammenbau) ein Hohlprofil entstehen. Erfindungsgemäß ist das erste und zweite Profilelement in einem Überlappungsbereich mittels wenigstens einer Schweißung miteinander verbunden sind, wobei der Überlappungsbereich ausschließlich im von dem Plattenelement abgewandten Bereich der Profilelemente vorgesehen ist und wobei der Überlappungsbereich den Mindestabstand zwischen den ersten und zweiten Sicken zumindest teilweise übergreift und wobei das Plattenelement im Bereich zwischen den Sicken im wesentlichen flach verläuft.

Hierdurch ist es erfindungsgemäß insbesondere vorteilhaft möglich, dass die Verbindung der Profilelemente untereinander bzw. miteinander nach der ihrer Verbindung mit dem Plattenelement vorgenommen wird, so dass insbesondere Toleranzen hinsichtlich der Maßgenauigkeit der Bauteile nicht dazu führen, dass die verschiedenen Schweißungen sich gegenseitig nachteilig beeinflussen. Ferner ist es erfindungsgemäß bevorzugt vorgesehen, dass der Überlappungsbereich bevorzugt ausschließlich im von dem Plattenelement abgewandten Bereich der Profilelemente vorgesehen ist und/oder dass der Überlappungsbereich bevorzugt den Mindestabstand zwischen den ersten und zweiten Sicken zumindest teilweise übergreift. Hierdurch kann erfindungsgemäß in vorteilhafter Weise erreicht werden, dass eine Verformung des Plattenelements im Bereich zwischen den ersten und zweiten Sicken zum Toleranzausgleich problemlos und mit einem vergleichsweise geringen Kraftaufwand möglich ist. Auch werden dadurch aufgrund des genannten Toleranzausgleichs auch vergleichsweise geringe Spannungen in das Material der Bauteile eingebracht.

Erfindungsgemäß wird bevorzugt die Schweißung sowohl des ersten Profilelements und des zweiten Profilelements miteinander als auch mit dem Plattenelement mittels jeweils einer Laserschweißung durchgeführt, was besonders kostengünstig, schnell und genau möglich ist.

Ein weiterer Gegenstand der vorliegenden Erfindung betrifft ein Verfahren zur Herstellung eines erfindungsgemäßen Strukturteils bzw. ein Verfahren zur Herstellung eines erfindungsgemäßen Fahrzeugsitzes, wobei in einem ersten Schritt mittels einer ersten Schweißung das erste Profilelement und das zweite Profilelement mit dem Plattenelement verbunden wird, wobei in einem zweiten Schritt ein Toleranzausgleich zwischen den Profilelementen vorgenommen wird und wobei in einem dritten Schritt mittels einer zweiten Schweißung die Profilelemente miteinander in einem Überlappungsbereich verbunden werden. Bei dem erfindungsgemäßen Verfahren ist es besonders bevorzugt, dass zur Positionierung der Profilelemente relativ zum Plattenelement im ersten Schritt lediglich eine Kraftbeaufschlagung zwischen den Profilelementen und dem Plattenelement vorgesehen ist und dass zur Positionierung der Profilelemente relativ zueinander im dritten Schritt eine Kraftbeaufschlagung zwischen den Profilelementen vorgesehen ist. Weiterhin ist es bei dem erfindungsgemäßen Verfahren bevorzugt, dass bei der ersten Schweißung eine erste Einspannung der Profilelemente und des Plattenelements relativ zueinander vorgesehen ist und dass bei der zweiten Schweißung eine zweite Einspannung der Profilelemente und des Plattenelements relativ zueinander vorgesehen ist. Beim erfindungsgemäßen Verfahren wird daher eine Umspannung der Bauteile vorgenommen. Bei einer Reihenfolge der Verfahrensschritte, bei der der erste Schritt (erste Schweißung), sodann der zweite Schritt (Toleranzausgleich, Umspannen) und anschließend der dritte Schritt (zweite Schweißung) vorgenommen wird, wird die Umspannung vorgenommen, bevor die zweite Schweißung (der Profilelemente miteinander) vorgenommen wird (und nachdem die Profilelemente mit dem Plattenelement (mittels der ersten Schweißung) verbunden sind). Bei einer Reihenfolge der Verfahrensschritte, bei der der dritte Schritt (zweite Schweißung), sodann der zweite Schritt (Toleranzausgleich, Umspannen) und anschließend der erste Schritt (erste Schweißung) vorgenommen wird, wird die Umspannung vorgenommen, bevor die erste Schweißung (der Profilelemente mit dem Plattenelement) vorgenommen wird (und nachdem die Profilelemente miteinander (mittels der zweiten Schweißung) verbunden sind).

Ausführungsbeispiele der Erfindung sind in der Zeichnung dargestellt und in der nachfolgenden Beschreibung näher erläutert.
**Figur 1** zeigt schematisch eine Seitenansicht eines Fahrzeugsitzes mit einer Rückenlehne.
**Figur 2** zeigt schematisch eine Draufsicht auf ein Plattenelement ohne darauf befestigte Profilelemente.
**Figur 3** zeigt schematisch ein erfindungsgemäßes Strukturteil, beispielsweise zur Verwendung in der Rückenlehne eines Fahrzeugsitzes.
**Figuren 4 und 5** zeigen schematisch das erste bzw. zweite Profilelement in Draufsicht und in einer Schnittdarstellung.
**Figuren 6 und 7** zeigen schematisch die Herstellung des erfindungsgemäßen Strukturteils, wobei die **Figur 6** den Zustand nach erfolgter erster Schweißung und die **Figur 7** den Zustand nach einem Umspannen der Bauteile (vor der Durchführung der zweiten Schweißung) darstellt.

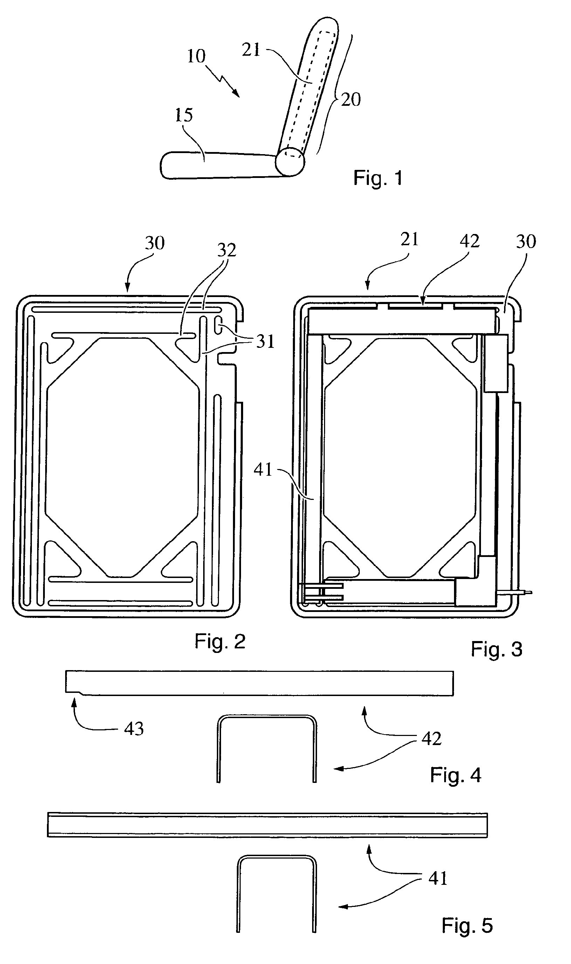

In Figur 1 ist schematisch in Seitenansicht ein erfindungsgemäßer Fahrzeugsitz 10 mit einer Rückenlehne 20 und einem Sitzteil 15 dargestellt. Im dargestellten Beispiel weist die Rückenlehne 20 ein erfindungsgemäßes Strukturteil 21 auf, welches schematisch mit gestrichelter Linie angedeutet ist. Ein ähnliches Strukturteil 21 könnte auch im Sitzteil 15 angeordnet sein, was jedoch nicht dargestellt ist. Das Strukturteil 21 weist ein in Figur 2 in Draufsicht dargestelltes Plattenelement 30 auf. Das Plattenelement 30 weist erste Sicken 31 und zweite Sicken 32 auf, die erfindungsgemäß derart voneinander beabstandet sind, dass zwischen jeder ersten Sicke 31 und jeder zweiten Sicke 32 ein Abstand vorgesehen ist, der einem Mindestabstand im Sinne eines Mehrfachen der Materialstärke des Plattenelements 30 entspricht, und insbesondere im Bereich des einfachen bis 30fachen der Materialstärke des Plattenelements 30 liegt, bevorzugt im Bereich des 2fachen bis 15fachen, besonders bevorzugt im Bereich des 4fachen bis 10 fachen. Gemäß sämtlicher Varianten bzw. Ausführungsbeispielen der vorliegenden Erfindung ist die Höhe der Sicken (beispielsweise gegenüber einer im wesentlichen nicht verformten Ebene des Plattenelements) derart vorgesehen, dass das Material des Plattenelements jedenfalls plastisch verformt vorgesehen ist, so dass eine vergleichweise gute Maßhaltigkeit des Bauteils gewährleistet ist. Beispielsweise entspricht die Höhe einer Sicke dem 0,5fachen bis 15fachen der Materialstärke des Plattenelements, bevorzugt dem einfachen bis 10fachen der Materialstärke des Plattenelements, besonders bevorzugt dem 2fachen bis 5fachen der Materialstärke des Plattenelements. Beispielsweise entspricht der Übergangsbereich des Übergangs von einer Sicke zur nicht verformten Ebene des Plattenelements dem 0,5fachen bis 15fachen der Materialstärke des Plattenelements, bevorzugt dem einfachen bis 10fachen der Materialstärke des Plattenelements, besonders bevorzugt dem 2fachen bis 5fachen der Materialstärke des Plattenelements. Beispielsweise entspricht die Breite einer Sicke (exklusive des Übergangsbereich) dem 3fachen bis 50fachen der Materialstärke des Plattenelements, bevorzugt dem 5fachen bis 30fachen der Materialstärke des Plattenelements, besonders bevorzugt dem 10fachen bis 20fachen der Materialstärke des Plattenelements.

In Figur 3 ist das Strukturteil 21 schematisch in Draufsicht dargestellt. Das Strukturteil 21 weist hierbei neben dem Plattenelement 30 eine Mehrzahl von Profilelementen auf. Die Profilelemente bilden im dargestellten Beispiel einen auf einer Seite des Strukturteils 21 im wesentlichen vollständig umlaufenden Rahmen aus, der im Beispiel viereckig ausgebildet ist. Lediglich beispielhaft ist von den Profilelementen ein erstes Profilelement 41 und ein zweites Profilelement 42 dargestellt.

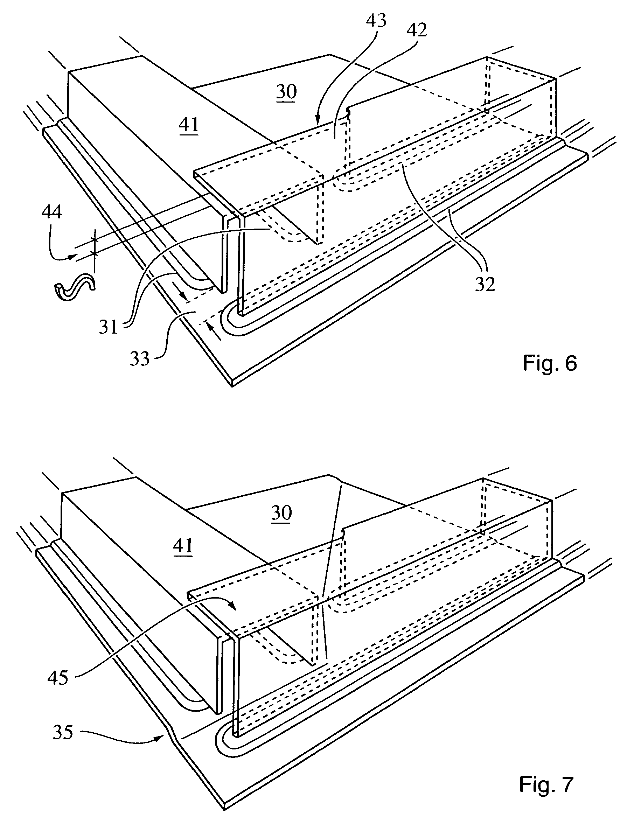

Die Figur 5 zeigt schematisch das erste Profilelement 41 in Draufsicht (obere Darstellung) sowie in einer Schnittdarstellung (untere Darstellung). Die Figur 4 zeigt schematisch das zweite Profilelement 42 in Draufsicht (obere Darstellung) sowie in einer Schnittdarstellung (untere Darstellung). Eines der Profilelemente 41, 42 (im Beispiel das zweite Profilelement 42) kann erfindungsgemäß einen Ausschnitt 43 aufweisen, so dass bei einem gewinkelten Anlegen der Profilelemente 41, 42 zueinander ein Überlappungsbereich 45 (vgl. Figur 7) entstehen kann.

Das erfindungsgemäße Verfahren zur Herstellung des Strukturteils 21 bzw. zur Herstellung des Fahrzeugsitzes 10 sieht vor, dass in einem ersten Schritt eine Verbindung der Profilelemente 41, 42 mit dem Plattenelement 30 erfolgt. Hierfür ist erfindungsgemäß (zumindest teilweise) eine erste Schweißung vorgesehen. Die erste Schweißung ist insbesondere als eine sogenannte Stumpfschweißung vorgesehen. Dies bedeutet, dass eine Kante des ersten und/oder zweiten Profilelements 41, 42 stumpf (d.h. weitgehend ohne flächiges Anliegen am Plattenelement 30) mit dem Plattenelement 30 verschweißt wird. Bevor die erste Schweißung ausgeführt werden kann, müssen die Bauteile relativ zueinander positioniert werden. Dies geschieht durch Andrücken des ersten Profilelements 41 und des zweiten Profilelements 42 an das Plattenelement 30 derart, dass stumpf zu schweißende Kanten der Profilelemente 41, 42 in Sickenbereichen bzw. in Bereichen der ersten Sicken 31 bzw. der zweiten Sicken 32 auf dem Plattenelement 30 aufliegen. Die erste Schweißung erfolgt bevorzugt von der Rückseite des Plattenelements 30 aus, d.h. von der den Profilelementen 41, 42 abgewandten Seite des Plattenelements 30. Der dritte Schritt der Herstellung des Strukturteils 21, d.h. die Schweißung der Profilelemente 41, 42 miteinander erfordert eine Relativpositionierung dieser Profilelemente 41, 42. Aufgrund von Maßtoleranzen kann hierbei gegenüber der ersten Schweißung eine Beabstandung der Profilelemente 41, 42 in einem Überlappungsbereich 45 auftreten. Eine solche Beabstandung ist erfindungsgemäß auch gewollt und erforderlich, wenn anders keine prozesssichere Durchführung der ersten Schweißung erfolgen kann (etwa weil die Länge der Schenkel des einen Profilelements ein Anliegen der Schenkel des anderen der Profilelemente im Stumpfschweißbereich verhindert). Diese Beabstandung wird erfindungsgemäß durch ein Umspannen der Bauteile in einem zweiten Verfahrensschritt derart beseitigt, dass die Profilelemente 41, 42 gegeneinander gedrückt werden und so im Überlappungsbereich eine prozesssichere zweite Schweißung erfolgen kann. Die zeitliche Abfolge der Verfahrensschritte kann erfindungsgemäß zum einen folgendermaßen sein: erster Verfahrensschritt (erste Schweißung), danach zweiter Verfahrensschritt (Umspannen, Toleranzausgleich), danach dritter Verfahrensschritt (zweite Schweißung). Die zeitliche Abfolge der Verfahrensschritte kann erfindungsgemäß jedoch alternativ dazu auch folgendermaßen sein: dritter Verfahrensschritt (zweite Schweißung), danach zweiter Verfahrensschritt (Umspannen, Toleranzausgleich), danach erster Verfahrensschritt (erste Schweißung). Die Figuren 6 und 7 zeigen schematisch die Herstellung des erfindungsgemäßen Strukturteils 21, wobei die Figur 6 den Zustand nach erfolgter erster Schweißung und die Figur 7 den Zustand nach einem Umspannen der Bauteile (vor der Durchführung der zweiten Schweißung) darstellt. In Figur 6 ist die Beabstandung 44 im Überlappungsbereich 45 dargestellt. Diese Beabstandung 44 überträgt sich durch das Umspannen der Bauteile vor der zweiten Schweißung auf das Plattenelement 30, was in Figur 7 mittels des Bezugszeichens 35 dargestellt ist. Der Mindestabstand 33 zwischen den ersten Sicken 31 und den zweiten Sicken 32 ist in Figur 6 schematisch dargestellt. Der Mindestabstand sorgt dafür, dass das Plattenelement 30 im Bereich zwischen den Sicken 31, 32 im wesentlichen flach verläuft (d.h. keine Sicken oder sonstigen Verstärkungselemente aufweist) und damit genügend weich bzw. verformbar ausgeführt ist, dass die Übertragung der Beabstandung 44 auf das Plattenelement 30 ohne das Ausüben zu großer Kräfte und das Einbringen zu großer Materialspannungen in dem fertig aufgebauten Strukturteil 21 möglich ist.

### Bezugszeichenliste

- 10: Fahrzeugsitz
- 15: Sitzteil
- 20: Rückenlehne
- 21: Strukturteil
- 30: Plattenelement
- 31: erste Sicken
- 32: zweite Sicken
- 33: Mindestabstand
- 35: Verformungsbereich
- 41: erstes Profilelement
- 42: zweites Profilelement
- 43: Ausschnitt
- 44: Beabstandung im Überlappungsbereich
- 45: Überlappungsbereich

## Patentansprüche

1. Strukturteil (21), insbesondere für die Rückenlehne (20) eines Fahrzeugsitzes (10), wobei das Strukturteil (21) wenigstens ein Plattenelement (30) und ferner ein erstes Profilelement (41) sowie ein zweites Profilelement (42) aufweist, wobei das erste Profilelement (41) und das zweite Profilelement (42) mit dem Plattenelement (30) mittels jeweils wenigstens einer Schweißung verbunden vorgesehen sind, wobei das Plattenelement (30) in einem ersten Verbindungsbereich mit dem ersten Profilelement (41) erste Sicken (31) und in einem zweiten Verbindungsbereich mit dem zweiten Profilelement (42) zweite Sicken (32) derart aufweist, dass ein Mindestabstand (33) zwischen den ersten und zweiten Sicken (31,32) vorgesehen ist, **dadurch gekennzeichnet, dass** das erste und zweite Profilelement (41,42) in einem Überlappungsbereich (45) mittels wenigstens einer Schweißung miteinander verbunden sind, wobei der Überlappungsbereich (45) ausschließlich im von dem Plattenelement (30) abgewandten Bereich der Profilelemente (41,42) vorgesehen ist und wobei der Überlappungsbereich (45) den Mindestabstand (33) zwischen den ersten und zweiten Sicken (31,32) zumindest teilweise übergreift und wobei das Plattenelement (30) im Bereich zwischen den Sicken (31, 32) im Wesentlichen flach verläuft.

2. Strukturteil (21) nach Anspruch 1, **dadurch gekennzeichnet, dass** das erste und/oder zweite Profilelement (41,42) zumindest teilweise mittels einer Stumpfschweißung mit dem Plattenelement (30) verbunden ist.

3. Strukturteil (21) nach einem der vorhergehenden Ansprüche, **dadurch gekennzeichnet, dass** das erste und/oder zweite Profilelement (41,42) als ein U-Profil und/oder ein C-Profil und/oder ein Z-Profil vorgesehen ist, wobei im Querschnitt das Schenkelende oder die Schenkelenden des ersten und/oder zweiten Profilelements (41,42) bevorzugt ohne Befestigungslaschen vorgesehen sind.

4. Strukturteil (21) nach einem der vorhergehenden Ansprüche, **dadurch gekennzeichnet, dass** die Schweißung sowohl des ersten Profilelements (41) und des zweiten Profilelements (42) miteinander als auch mit dem Plattenelement (30) mittels jeweils einer Laserschweißung vorgesehen ist.

5. Fahrzeugsitz (10), insbesondere Rücksitzbank eines Fahrzeuges, mit einer Rückenlehne (20) und/oder mit einem Sitzteil (15), wobei die Rückenlehne (20) und/oder das Sitzteil (15) wenigstens ein Strukturteil (21), bevorzugt jedoch zwei Strukturteile (21) gemäß einem der vorhergehenden Ansprüche aufweist, wobei ferner bevorzugt die Strukturteile (21) eine unterschiedliche Größe aufweisen.

6. Verfahren zur Herstellung eines Strukturteils (21) gemäß einem der Ansprüche 1 bis 4 oder Verfahren zur Herstellung eines Fahrzeugsitzes (10) nach Anspruch 5, **dadurch gekennzeichnet, dass** in einem ersten Schritt mittels einer ersten Schweißung das erste Profilelement (41) und das zweite Profilelement (42) mit dem Plattenelement (30) verbunden wird, dass in einem zweiten Schritt ein Toleranzausgleich zwischen den Profilelementen (41,42) vorgenommen wird und dass in einem dritten Schritt mittels einer zweiten Schweißung die Profilelemente (41,42) miteinander in einem Überlappungsbereich (45) verbunden werden.

7. Verfahren nach Anspruch 6, **dadurch gekennzeichnet, dass** zur Positionierung der Profilelemente (41,42) relativ zum Plattenelement (30) im ersten Schritt lediglich eine Kraftbeaufschlagung zwischen den Profilelementen (41,42) und dem Plattenelement (30) vorgesehen ist und dass zur Positionierung der Profilelemente (41,42) relativ zueinander im dritten Schritt eine Kraftbeaufschlagung zwischen den Profilelementen (41,42) vorgesehen ist.

8. Verfahren nach Anspruch 6 oder 7, **dadurch gekennzeichnet, dass** bei der ersten Schweißung eine erste Einspannung der Profilelemente (41,42) und des Plattenelements (30) relativ zueinander vorgesehen ist und dass bei der zweiten Schweißung eine zweite Einspannung der Profilelemente (41,42) und des Plattenelements (30) relativ zueinander vorgesehen ist.

## Claims

1. Structure part (21), in particular for the back rest (20) of a vehicle seat (10), wherein the structure part (21) comprises at least one plate element (30) and also a first profile element (41) as well as a second profile element (42), wherein the first profile element (41) and the second profile element (42) are each envisaged to be connected with the plate element (30) by means of at least one weld, wherein the plate element (30) comprises first beads (31) in a first connection area with the first profile element (41), and second beads (32) in a second connection element with the second profile element (42) in such a way that a minimum distance (33) is envisaged between the first and second beads (31, 32), **characterised in that** the first and second profile element (41, 42) are connected with each other in an overlap area (45) by means of at least one weld, wherein the overlap area (45) is envisaged only in the area of the profile elements (41, 42) that faces away from the plate element (30), and wherein the overlap area (45) straddles the minimum distance (33) between the first and second beads (31, 32) at least in part, and wherein the plate element (30) extends substantially flat in the area between the beads (31, 32).

2. Structure part (21) according to claim 1, **characterised in that** the first and/or second profile element (41, 42) is/are connected with the plate element (30) at least in part by means of a butt weld.

3. Structure part (21) according to one of the preceding claims, **characterised in that** the first and/or second profile element (41, 42) is/are envisaged as a U-profile and/or a C-profile and/or a Z-profile, wherein the cross-section of the side end or the side ends of the first and/or second profile element(s) (41, 42) is/are preferably envisaged without fitting tabs.

4. Structure part (21) according to one of the preceding claims, **characterised in that** the weld of the first profile element (41) as well as that of the second profile element (42) are each envisaged to be connected with each other as well as with the plate element (30) by means of a laser weld.

5. Vehicle seat (10), in particular a back seat bench of a vehicle, with a back rest (20) and/or with a seat part (15), wherein the back rest (20) and/or the seat part (15) comprises at least one structure part (21), but preferably two structure parts (21) according to one of the preceding claims, and the structure parts (21) are also preferably of a different size.

6. Method for producing a structure part (21) according to one of the claims 1 to 4, or a method for producing a vehicle seat (10) according to claim 5, **characterised in that** the first profile element (41) and the second profile element (42) are connected with the plate element (30) by means of a first weld during a first step, **in that** a tolerance adjustment is applied between the profile elements (41, 42) during a second step, and **in that** the profile elements (41, 42) are connected with each other in an overlap area (45) by means of a second weld during a third step.

7. Method according to claim 6, **characterised in that** a force application for positioning the profile elements (41, 42) relative to the plate element (30) during the first step is envisaged only between the profile elements (41, 42) and the plate element (30), and **in that** a force application for positioning the profile elements (41, 42) relative to each other during the third step is envisaged between the profile elements (41, 42).

8. Method according to claim 6 or 7, **characterised in that** a first tensioning of the profile elements (41, 42) and the plate elements (30) relative to each other is envisaged for the first weld, and **in that** a second tensioning of the profile elements (41, 42) and the plate elements (30) relative to each other is envisaged for the second weld.

## Revendications

1. Élément structurel (21), notamment pour le dossier (20) d'un siège de véhicule (10), l'élément structurel (21) présentant au moins un élément en plaque (30) et également un premier élément profilé (41) ainsi qu'un deuxième élément profilé (42), ledit premier élément profilé (41) et ledit deuxième élément profilé (42) étant reliés audit élément en plaque (30) à l'aide chaque fois d'au moins un joint de soudage, ledit élément en plaque (30) présentant un premier bordage (31) avec le premier élément profilé (41) dans la première zone de jonction et un deuxième bordage (32) avec le deuxième élément profilé (42) dans la deuxième zone de jonction de telle manière qu'une distance minimum (33) est prévue entre le premier et le deuxième bordages (31, 32), **caractérisé en ce que** les premier et deuxième éléments profilés (41, 42) sont reliés entre eux à l'aide d'au moins un joint de soudage dans une zone de chevauchement (45), ladite zone de chevauchement (45) étant prévue exclusivement dans la zone des éléments profilés (41, 42) opposée à l'élément en plaque (30) et ladite zone de chevauchement (45) recouvrant au moins partiellement la distance minimum (33) entre le premier et le deuxième bordages (31, 32), et l'élément en plaque (30) se prolongeant essentiellement à plat dans la zone entre les bordages (31, 32).

2. Élément structurel (21) selon la revendication 1, **caractérisé en ce que** le premier et/ou le deuxième élément profilé (41, 42) est relié au moins partiellement à l'élément en plaque (30) à l'aide d'une soudure bout à bout.

3. Élément structurel (21) selon l'une des revendications précédentes, **caractérisé en ce que** le premier et/ou le deuxième élément profilé (41, 42) est prévu comme un profilé en U et/ou un profilé en C et/ou un profilé en Z, l'extrémité de branche ou les extrémités de branche du premier et/ou du deuxième élément profilé (41, 42) étant prévues de préférence sans colliers de fixation en section transversale.

4. Élément structurel (21) selon l'une des revendications précédentes, **caractérisé en ce que** le joint de soudage non seulement du premier élément profilé (41) et du deuxième élément profilé (42) ensemble mais également avec l'élément en plaque (30) est prévu à l'aide chaque fois d'une soudure au laser.

5. Siège de véhicule (10), notamment une banquette arrière d'un véhicule, doté d'un dossier (20) et/ou d'un composant de siège (15), ledit dossier (20) et/ou ledit composant de siège (15) présentant au moins un élément structurel (21), mais de préférence deux éléments structurels (21) selon l'une des revendications précédentes, lesdits éléments structurels (21) de préférence présentant des dimensions différentes.

6. Procédé pour la fabrication d'un élément structurel (21) selon l'une des revendications 1 à 4 ou procédé pour la fabrication d'un siège de véhicule (10) selon la revendication 5, **caractérisé en ce qu'**au cours d'une première étape le premier élément profilé (41) et le deuxième élément profilé (42) sont reliés à l'élément en plaque (30) à l'aide d'un premier joint de soudure, qu'au cours d'une deuxième étape une compensation de tolérance entre les éléments profilés (41, 42) est réalisée et qu'au cours d'une troisième étape les éléments profilés (41, 42) sont reliés ensemble à l'aide d'un second joint de soudage dans une zone de chevauchement (45).

7. Procédé selon la revendication 6, **caractérisé en ce qu'**une force est appliquée au cours de la première étape uniquement entre les éléments profilés (41, 42) et l'élément en plaque (30) afin de positionner les éléments profilés (41, 42) par rapport à l'élément en plaque (30) et qu'une force est appliquée entre les éléments profilés (41, 42) au cours de la troisième étape afin de positionner les éléments profilés (41, 42) l'un par rapport à l'autre.

8. Procédé selon la revendication 6 ou 7, **caractérisé en ce qu'**un premier serrage des éléments profilés (41, 42) et de l'élément en plaque (30) est prévu entre eux au premier joint de soudure et qu'un deuxième serrage des éléments profilés (41, 42) et de l'élément en plaque (30) est prévu entre eux au deuxième joint de soudure.
